# FASCICULE DE BREVET EUROPEEN

(11) **EP 0 626 642 B1**
(45) Date de publication et mention de la délivrance du brevet: **28.07.1999**
(21) Numéro de dépôt: 94410037.9
(22) Date de dépôt: 20.05.1994
(51) Int. Cl.: G06F 9/46, G06F 9/32

(54) **Architecture de processeur multi-tâches**
Multitasking-Prozessorarchitektur
Multitasking processor architecture

(30) Priorité: 27.05.1993 FR 9306612
(43) Date de publication de la demande: 30.11.1994
(73) Titulaire: STMicroelectronics S.A., 94250 Gentilly (FR)
(72) Inventeur: Artieri, Alain, F-38240 Meylan (FR)
(74) Mandataire: de Beaumont, Michel

(56) Documents cités:
- EP-A- 0 221 741
- GB-A- 2 187 577
- US-A- 4 352 157
- US-A- 4 462 074

## Description

La présente invention concerne une architecture de processeur multi-tâches, c'est-à-dire d'un processeur unique devant exécuter en temps partagé plusieurs tâches nécessitant un traitement. La présente invention vise plus particulièment une telle architecture adaptée à un traitement des tâches en temps réel.

Pour gérer des processus multi-tâches, la solution la plus simple et la moins coûteuse est de prévoir un système à processeur qui exécute plusieurs programmes, correspondant aux tâches, en temps partagé (les programmes sont exécutés à tour de rôle). Si un deuxième programme doit être exécuté par le processeur alors qu'un premier programme est en cours d'exécution, une requête d'interruption est émise vers le processeur qui suspend l'exécution du premier programme si le deuxième programme est plus prioritaire. Lors d'une telle interruption du premier programme, le processeur doit effectuer ce que l'on appelle une sauvegarde de contexte. Lorsque l'exécution du premier programme est reprise, on effectue une restauration de contexte permettant au premier programme de reprendre à partir du stade où il a été interrompu.

Bien que les systèmes multi-tâches à processeur soient simples et économiques, ils s'avèrent relativement lents du fait que les interruptions entraînent des temps morts de plusieurs cycles d'instructions. En effet, lors d'une interruption, un sous-programme de traitement d'interruption est appelé, qui est chargé d'effectuer la sauvegarde de contexte et de trouver l'adresse de départ du nouveau programme à exécuter. La restauration de contexte, consistant à effectuer les opérations inverses, est aussi coûteuse en temps.

Un tel système devient inopérant lorsque le taux d'interruption devient important et que les tâches doivent être effectuées en temps réel.

Un exemple de système multi-tâches temps réel est un système de traitement d'images de télévision où l'on doit recevoir et traiter un flot continu de données, tout en fournissant un flot continu de données traitées.

Pour le traitement d'images, on utilise le plus souvent des systèmes à architecture série, couramment dite "architecture pipeline", qui permettent de traiter les débits de données exigés, mais qui sont très complexes et coûteux.

La demande de brevet européen 0 503 956 décrit un système de traitement d'images en temps partagé. Il s'agit d'un système pour décomprimer des signaux vidéo comprimés selon une norme MPEG. Dans ce système, des données à traiter sont transférées entre une mémoire, un dispositif de décodage, un dispositif de compensation de mouvement, et un dispositif de calcul de la transformée cosinus discrète inverse (DCT⁻¹) des données. Les transferts entre ces éléments sont gérés par un processeur spécifique fonctionnant par interruptions.

Bien que le processeur utilisé dans ce document soit spécifiquement adapté au transfert de données entre les éléments, le temps de traitement des interruptions reste important et ne permet pas à ce système de traiter les débits de données exigés actuellement.

Un objet de la présente invention est de prévoir une architecture de processeur multi-tâches qui soit particulièrement rapide pour passer de l'exécution d'une tâche à l'exécution d'une autre tâche.

Un autre objet de la présente invention est de prévoir un système de traitement d'images en temps partagé pouvant traiter des débits de données particulièrement rapides, en particulier les débits exigés par les normes actuelles.

Ces objets sont atteints grâce à une architecture de processeur pour exécuter une tâche courante parmi une pluralité de tâches possibles comprenant : une mémoire dans laquelle sont stockées les instructions de programmes correspondant respectivement aux tâches ; une unité de traitement de commandes couplée à la mémoire pour recevoir de celle-ci les instructions successives à exécuter ; des moyens pour fournir des signaux de requête actifs associés respectivement aux tâches qui demandent à être exécutées ; une pluralité de pointeurs d'instruction associés respectivement aux tâches possibles et contenant chacun l'adresse de l'instruction courante à exécuter de la tâche associée, un seul de oes pointeurs étant susoeptible d'être validé à la fois pour fournir son contenu en tant qu'adresse à la mémoire ; un décodeur de niveau de priorité affectant un niveau de priorité prédéterminé à chaque signal de requête et validant le pointeur d'instruction associé au signal de requête actif de niveau de priorité le plus élevé ; et des moyens pour incrémenter le contenu du pointeur d'instruction validé et pour le réinitialiser à l'adresse de début du programme associé lorsque son contenu atteint l'adresse de fin du programme associé.

Le document US - A - 4 352 157 décrit une architecture de processeur multi-tâches comprenant une mémoire dans laquelle sont stockées les instructions de programmes correspondant respectivement aux tâches, une unité de traitement et une pluralité de pointeurs d'instruction respectivement associés aux tâches, contenant chacun l' adresse de l'instruction courante à exécuter de la tâche associée.

Selon un mode de réalisation de la présente invention, chaque instruction comprend un champ de commande fourni à l'unité de traitement de commandes et un champ de nature d'instruction fourni à un décodeur de préfixe comprenant : des moyens pour autoriser une nouvelle validation de pointeur d'instruction par le décodeur de niveau de priorité si le champ de nature de l'instruction courante est à une première valeur prédéterminée ; et des moyens pour initialiser le contenu du pointeur d'instruction validé à l'adresse de début du programme en cours si le champ de nature de l'instruction courante est à une deuxième valeur prédéterminée.

Selon un mode de réalisation de la présente invention, le décodeur de préfixe comprend des moyens pour inhiber l'incrémentation du pointeur d'instruction validé si le champ de nature est à une troisième valeur prédéterminée, de manière que l'instruction courante soit exécutée plusieurs fois de suite, le nombre d'exécutions étant déterminé par la troisième valeur.

Selon un mode de réalisation de la présente invention, la mémoire contenant les programmes associés aux tâches est une mémoire indépendante d'un bus sur lequel agit l'unité de traitement de commandes.

Selon un mode de réalisation de la présente invention, chaque instruction comprend un champ de commande fourni à l'unité de traitement de commandes et un champ d'acquittement fourni à des moyens pour, lorsque l'instruction est en cours d'exécution, activer des dispositifs couplés à l'unité de traitement de commandes.

Selon un mode de réalisation de la présente invention, lesdits dispositifs couplés à l'unité de traitement de commandes comprennent : au moins un dispositif à lecture seule activant un signal de requête associé pour indiquer qu'il a besoin de transférer des données dans une mémoire de transit, l'acquittement de cette requête consistant à sélectionner seulement ce dispositif à lecture seule tandis qu'une tâche de transfert de données du bus vers la mémoire de transit est exécutée ; et au moins un dispositif à écriture seule activant un signal de requête associé lorsqu'il a besoin de reoevoir des données de la mémoire de transit, l'acquittement de oette requête consistant à sélectionner seulement ce dispositif à écriture seule tandis qu'une tâche de transfert de données de la mémoire de transit sur le bus est exécutée.

Selon un mode de réalisation de la présente invention, l'unité de traitement comprend une pluralité de fonctions câblées de calcul d'adresses, chaque fonction étant sélectionnée par un champ d'une instruction de lecture ou écriture en cours d'exécution.

Selon un mode de réalisation de la présente invention, à chaque fonction câblée est associé un registre d'adresses relié à un bus d'adresses, la fonction câblée étant prévue pour, à chaque exécution d'une instruction dans l'unité de traitement, modifier adéquatement le contenu de son registre d'adresses.

Ces objets, caractéristiques et avantages ainsi que d'autres de la présente invention seront exposés en détail dans la description suivante faite en relation avec les figures jointes parmi lesquelles :
la figure 1 représente un exemple d'architecture de processeur multi-tâches selon la présente invention ;
la figure 2 représente un autre exemple d'architecture de processeur selon l'invention ;
la figure 3 représente un exemple d'architecture de processeur selon l'invention plus particulièrement adaptée à un système de traitement de signal ;
la figure 4A représente un exemple simplifié d'architecture de processeur selon l'invention plus particulièrement adaptée à un système de traitement d'images ; et
la figure 4B représente des blocs de données correspondant à des portions d'image traitées par un système de traitement d'image fonctionnant selon une norme MPEG.

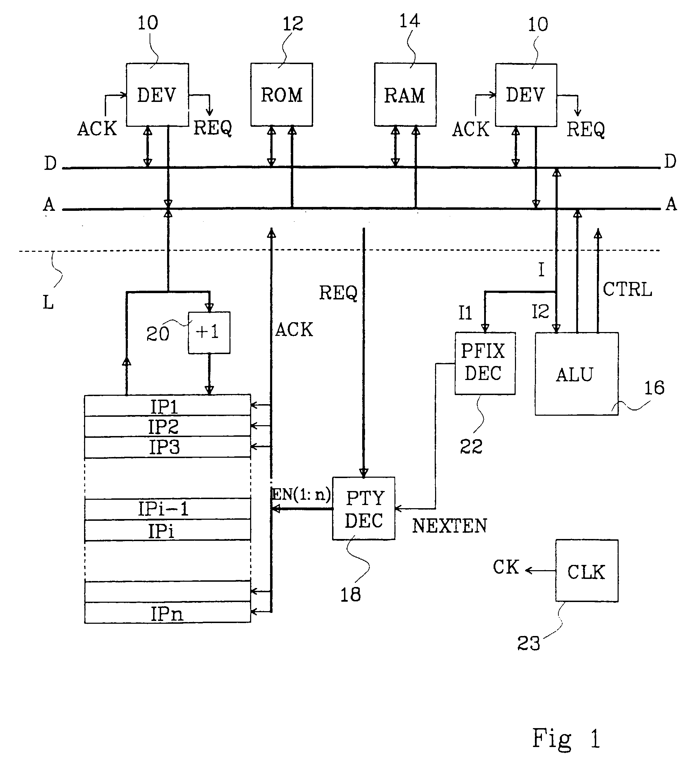

A la figure 1, divers dispositifs 10 à gérer en multi-tâches sont reliés à un bus système comprenant un bus de données D, un bus d'adresses A, et un bus de contrôle CTRL servant, entre autres, à sélectionner un mode lecture ou écriture des éléments reliés au bus système. Une mémoire morte (ROM) 12 et une mémoire vive (RAM) 14 sont également reliées au bus système.

Les tâches essentielles à effectuer par un processeur dans un tel système consistant à échanger des données entre les éléments 10, 12 et 14 et, éventuellement, à effectuer des opérations sur les données.

Un mode de réalisation de processeur selon l'invention est représenté sous une ligne en pointillés L. Ce processeur comprend une unité de traitement d'instructions (IPROC) 16 reliée au bus système D, A, CTRL. Cette unité de traitement est, par exemple, une unité de traitement classique, comprenant une unité arithmétique et logique (ALU), que l'on trouve dans tout type de microprocesseur. Une unité de traitement classique reçoit, ou charge, dans un premier temps une instruction I stockée dans la mémoire ROM ou RAM par l'intermédiaire du bus de données D et, dans un deuxième temps, exécute cette instruction. L'exécution de l'instruction a pour conséquence, de façon générale, une activité sur les bus D, A, et CTRL.

Dans un processeur classique, l'adresse à laquelle se trouve l'instruction à fournir à l'unité de traitement 16 est contenue dans un unique pointeur d'instruction. C'est le contenu de ce pointeur d'instruction qu'il faut sauvegarder et restaurer lorsque, respectivement, on interrompt l'exécution d'un programme et on reprend son exécution ultérieurement.

Un processeur selon l'invention comprend, au contraire, une pluralité de pointeurs d'instruction IP1, IP2... IPn correspondant chacun à une tâche possible à exécuter. Chacun de ces pointeurs, mais un seul à la fois, peut être validé par une ligne de validation EN1 à ENn pour fournir son contenu comme adresse de l'instruction à exécuter par l'unité de traitement 16. Les lignes de validation EN sont commandées par un décodeur de niveau de priorité 18 qui reçoit une ligne de requête REQ de chaque dispositif 10 susceptible d'exiger un traitement par le processeur. A chaque ligne de requête, par conséquent à chaque dispositif 10, est associé un niveau de priorité. Il est éventuellement possible d'affecter un même niveau de priorité à plusieurs tâches ; le décodeur 18 doit alors se charger de ne valider qu'un seul pointeur IP à la fois, par exemple en affectant de façon interne des niveaux de priorité différents à ces tâches et en permutant circulairement ces niveaux à chaque exécution d'une instruction ou groupe d'instructions. Ceci revient à dire que des tâches qui auraient un même niveau de priorité ont en fait des niveaux différents qui permutent.

Les lignes de validation EN servent, le cas échéant, de lignes d'acquittement ACK des requêtes émises par les dispositifs 10 (on entend par "requête" le fait qu'une ligne de requête est mise à un niveau actif). Un acquittement peut avoir des effets divers selon la nature du dispositif le recevant. Par exemple, un dispositif peut attendre de lire ou écrire des données sur le bus ; lorsqu'il reçoit un acquittement, il devient actif et répond aux ordres de transfert de données lui arrivant par les bus de contrôle CTRL et d'adresses A, ces ordres correspondant aux instructions du programme en cours d'exécution.

Les programmes correspondant respectivement aux tâches susceptibles d'être exécutées sont stockés dans la mémoire ROM ou RAM à des emplacements distincts. On peut stocker dans la mémoire ROM des programmes de base que l'on est sûr de devoir exécuter dans tout système réalisé sur la base de l'architecture de la figure 1, et dans la mémoire RAM des programmes choisis par un utilisateur et chargés à partir d'une disquette ou d'un disque dur, par exemple. Le fait qu'un utilisateur puisse charger des programmes dans la mémoire RAM est particulièrement utile si le système est modulaire, c'est-à-dire que l'utilisateur peut ajouter ou supprimer sur le bus système D, A, CTRL des dispositifs à gérer. Le nombre maximum de tâches que le système pourra gérer est égal au nombre n de pointeurs d'instruction IP prévus dans le processeur.

Le fonctionnement de ce système est le suivant.

A la mise sous tension, chaque pointeur d'instruction IPi (i=1, 2... n) est initialisé à une valeur de départ IPi₀ correspondant à l'adresse de départ du programme associé. Ces adresses de départ pourront, par exemple, être stockées dans une table de la mémoire ROM ou RAM et transférées dans les pointeurs respectifs par un programme de démarrage, ou bien par un système d'exploitation. Il faut en outre affecter un niveau de priorité à chaque programme. Pour cela, par exemple, on affecte comme niveau de priorité à un programme le rang du pointeur d'instruction associé. On peut aussi prévoir un décodeur de priorité 18 dont la fonction de décodage est programmée à la mise sous tension.

Une fois que le système est sous tension, il apparaît des requêtes sur les lignes REQ. Le décodeur de priorité 18 valide le pointeur d'instruction IP associé à la requête la plus prioritaire. L'unité de traitement d'instructions 16 reçoit (ou charge) l'instruction se trouvant à l'adresse indiquée par le pointeur d'instruction validé et exécute cette instruction. Lorsque l'instruction est exécutée, un circuit d'incrémentation 20 incrémente le pointeur d'instruction validé qui fournit alors l'adresse de l'instruction suivante à exécuter par l'unité de traitement 16. Le circuit d'incrémentation n'agit que sur le pointeur validé, de manière que le contenu des autres pointeurs ne soit pas modifié. La représentation (+1) du circuit d'incrémentation 20 est symbolique ; les instructions à exécuter ne se trouvent pas forcément à des adresses successives, par exemple si les instructions sont de longueurs différentes ou que l'on exécute des instructions de saut ou d'appel de sous-programme. Dans un tel cas, le pointeur d'instruction validé est incrémenté ou décrémenté de la valeur adéquate, comme cela est connu dans les processeurs classiques.

Ci après, on désignera par le rang (i) d'un pointeur d'instruction IP le programme (ou tâche) et la requête associés. Une tâche peut correspondre à plusieurs exécutions en boucle du programme associé, ou bien à l'exécution d'une portion du programme. Ainsi, une fin de programme ne correspond pas forcément à la fin de la tâche associée, et réciproquement ; la fin de la tâche survient lorsque sa requête disparait (on dira que la tâche est servie). La tâche peut également être continue.

Lorsqu'il apparait une requête i plus prioritaire que celle du programme i-1 en cours d'exécution, le décodeur 18 valide le pointeur d'instruction IPi à la place du pointeur IPi-1 immédiatement après l'exécution de l'instruction (ou d'un groupe d'instructions) en cours du programme i-1. La requête i est en même temps acquittée par la ligne associée d'acquittement ACK. L'instruction pointée par le nouveau pointeur validé IPi est chargée dans l'unité de traitement 16 et exécutée sans perte de temps, c'est-à-dire que la nouvelle instruction est exécutée à l'instant où aurait été exécutée l'instruction suivante du programme i-1.

Lorsque la tâche prioritaire i est servie, la requête i est désactivée et le décodeur 18 valide le pointeur d'instruction correspondant à une nouvelle tâche de priorité maximale, cette tâche pouvant être une tâche qui a été suspendue par la tâche i ou une nouvelle tâche. Le programme associé est exécuté immédiatement à partir de son point de suspension, ou bien à partir de son début s'il s'agit d'un programme correspondant à une tâche qui n'a pas encore été commencée.

On remarquera, avec un tel système, que la commutation d'une tâche à l'autre se passe sans les temps morts qui auraient été nécessaires dans un système classique pour effectuer des sauvegardes et restaurations de contexte.

Bien entendu, les fonctionnements de l'unité de traitement 16, du décodeur 18, du circuit d'incrémentation des pointeurs IP sont synchronisés sur un signal d'horloge commun CK fourni par un circuit d'horloge 23 cadençant la succession des instructions (les cycles d'instruction). L'incrémentation des pointeurs peut se faire soit à la fin, soit au début de chaque cycle d'instruction.

De préférence, comme cela est connu dans la technique, on associe les niveaux de priorité les plus élevés aux tâches les plus courtes. La longueur d'une tâche est déterminée par la durée d'activation de la requête associée qui ne dépend pas de la longueur du programme associé. Bien entendu, des tâches longues nécessitant un traitement rapide pourront échapper à cette règle.

Comme on l'a précédemment indiqué, des programmes associés à certaines tâches peuvent être prévus pour être exécutés en boucle. Ainsi, dans le système de la figure 1, la dernière instruction d'un tel programme sera un saut jusqu'à la première instruction du programme. Ce saut peut être géré de manière classique par le circuit d'incrémentation 20. On verra ultérieurement une manière optimale, selon l'invention, de gérer des boucles.

Dans des systèmes à processeur classiques, il existe des groupes d'instructions qu'il est souhaitable de ne pas suspendre. Classiquement, des instructions spécifiques permettent, dans un processeur classique, de désactiver et d'activer la prise en compte de requêtes d'interruption. Toutefois, dans un processeur selon l'invention, de telles instructions spécifiques ne conviennent pas.

Pour résoudre ce problème, la présente invention prévoit de décomposer chaque instruction I en un préfixe I1 et une commande I2. Le préfixe I1 est fourni à un décodeur de préfixe 22, et la commande I2, correspondant à une instruction classique, est fournie à l'unité de traitement 16. Le préfixe I1 indique que le programme en cours peut être suspendu ou non après l'exécution de l'instruction associée pour céder la main à un programme plus prioritaire.

Le décodeur de préfixe 22 fournit au décodeur de priorité 18 un signal NEXTEN qui, si le préfixe est à une valeur spécifique, inhibe la validation d'un nouveau pointeur d'instruction même s'il apparaît une requête de priorité supérieure à celle du programme en cours.

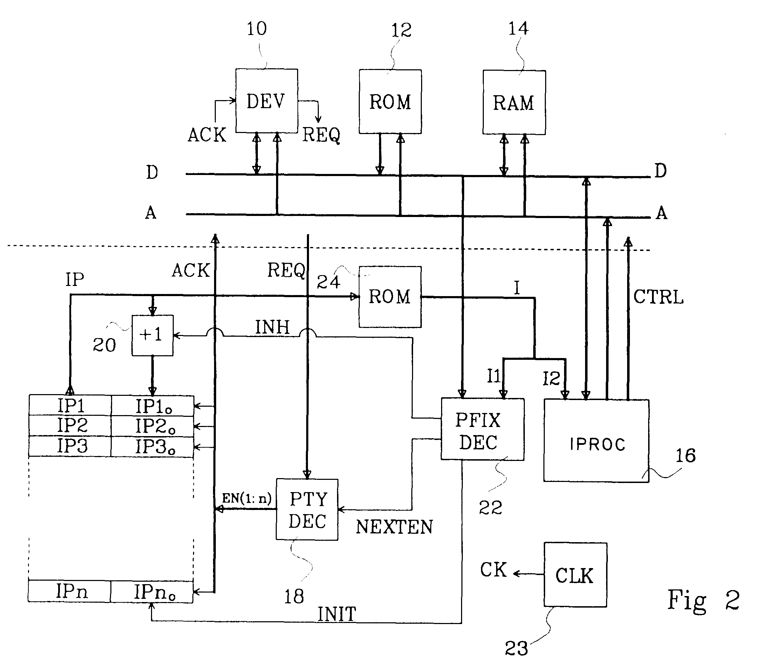

La figure 2 représente un autre mode de réalisation d'une architecture de processeur multi-tâches selon l'invention. Des mêmes éléments qu'à la figure 1 sont désignés par des mêmes références. Cette architecture est adaptée à un système multi-tâches dont les tâches sont prédéfinies. Les programmes correspondant aux tâches sont stockés dans une mémoire ROM 24 indépendante du bus système D, A, CTRL. Le contenu du pointeur d'instruction IPi validé est fourni directement à l'entrée d'adresses de la mémoire ROM 24 au lieu d'être fourni sur le bus d'adresses A. L'unité de traitement 16 est reliée, comme précédemment au bus système D, A, CTRL mais est modifiée pour recevoir directement les instructions de la mémoire ROM 24. Cette modification d'une unité de traitement classique peut être réalisée sans difficulté. Une unité de traitement classique comprend un registre d'instruction et des registres de travail reliés au bus de données D. Lorsqu'une instruction est chargée, elle est écrite dans le registre d'instruction et, lorsque cette instruction est exécutée, des opérations se produisent entre le bus de données D et les registres de travail. Selon l'invention, au lieu de relier le registre d'intruction au bus de données D, ce registre d'instruction est relié à la sortie de la mémoire ROM 24. Avec un tel système (non représenté), une instruction est exécutée dès qu'elle est chargée dans l'unité de traitement 16. On économise ainsi autant de cycles de lecture qu'il y a d'instructions à exécuter, ce qui représente une économie notable de temps.

On peut associer au système de la figure 2 des optimisations supplémentaires. Le préfixe Il des instructions est prévu de sorte qu'il permet d'indiquer par un nombre de bits adéquat non seulement que le programme en cours peut être suspendu ou non après l'instruction courante, mais aussi que l'instruction en cours doit être exécutée un certain nombre de fois. Le préfixe I1 permet également d'indiquer que l'instruction en cours est ou non la dernière du programme (l'utilité de cette possibilité sera évoquée ultérieurement).

Le décodeur de préfixe 22 contient un décompteur de cycles d'instruction qui est initialisé à un nombre de cycles déterminé par le préfixe I1. Ce nombre peut être un nombre sélectionné parmi plusieurs nombres constants stockés dans le décodeur de préfixe ou bien un nombre N fourni par le bus de données D, ce nombre N étant calculé et stocké en mémoire, ou bien fourni par le dispositif 10 servi. Lorsqu'une telle instruction de boucle est exécutée, le décodeur de préfixe 22 inhibe le circuit d'incrémentation 20 durant le nombre de cycles d'instruction souhaité. I1 en résulte que l'instruction chargée est exécutée le nombre de fois désiré.

Ceci permet d'économiser une instruction de saut par boucle à effectuer, ce qui représente une économie de temps notable si l'on doit exécuter une seule instruction plusieurs fois de suite. De telles instructions de boucle sont particulièrement utiles lorsque l'on doit transférer des données par blocs d'un élément du bus système à un autre.

Dans le mode de réalisation de la figure 2, chaque pointeur d'instruction IP comprend deux registres dont l'un contient l'adresse de l'instruction à exécuter du programme associé et l'autre l'adresse de départ IP₀ de ce programme. Plusieurs solutions pour fournir les valeurs IP₀ sont possibles. La mémoire ROM 24 peut comporter une table d'adresses de départ, ces adresses étant écrites dans les registres correspondants à la mise sous tension. Si les programmes dans la mémoire ROM 24 sont identiques d'un système à un autre, leurs adresses de départ IP₀ peuvent être obtenues de façon câblée. Cette dernière solution évite la nécessité de coupler les pointeurs IP au bus système, ce qui permet une simplification de la structure du processeur.

Si le préfixe I1 indique que l'instruction en cours d'exécution est la dernière, le décodeur 22 fournit, après l'exécution de l'instruction, un signal INIT à l'ensemble des pointeurs d'instruction IP, qui provoque l'initialisation à l'adresse de début de programme du pointeur validé seulement.

Avec un tel système, le jeu d'instructions du processeur peut, dans certains cas, être restreint à un jeu ne comportant pas d'instructions de saut, ce qui permet de simplifier de façon notable le processeur, notamment le circuit d'incrémentation 20.

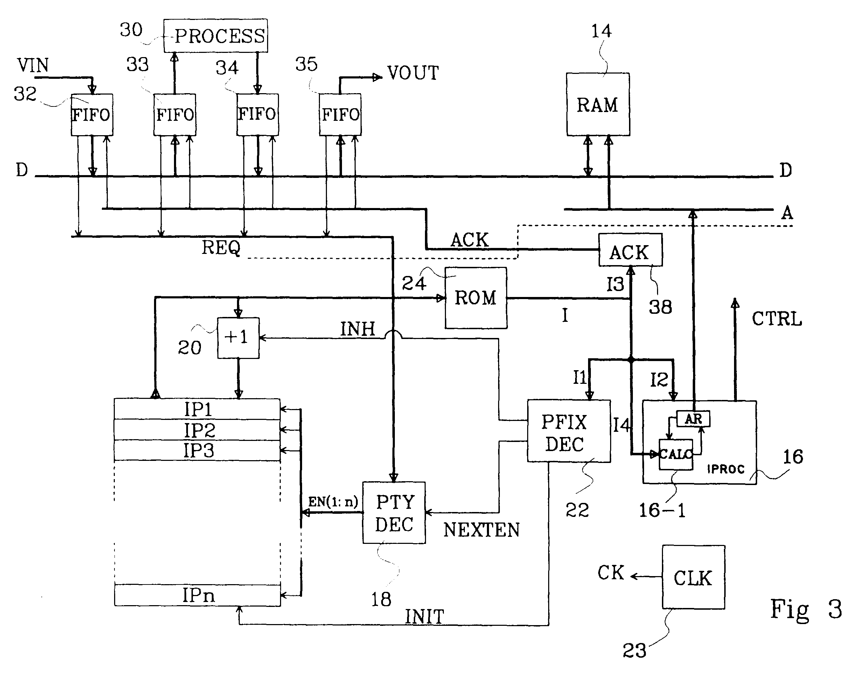

La figure 3 représente un mode de réalisation d'architecture de processeur selon la présente invention adapté à un système de traitement de signal, par exemple d'un signal vidéo. Des mêmes éléments qu'à la figure 2 sont désignés par des mêmes référenoes.

Dans un système de traitement de signal à temps partagé, comme celui de la demande de brevet européen 0 503 956, le traitement lui-même est effectué par des circuits spécialisés. Le processeur ne sert qu'à effectuer des transferts de données entre une mémoire RAM et les divers circuits de traitement.

L'architecture de la figure 3 est destinée à transférer dans la mémoire RAM 14 des données arrivant en flot continu sur un bus VIN, à transférer le contenu de la mémoire RAM dans un circuit de traitement 30, à transférer les données traitées par le circuit 30 dans la mémoire RAM, et enfin à transférer le contenu de la mémoire RAM sur un bus de sortie VOUT. Les passages intermédiaires par la mémoire RAM 14 sont nécessaires parce que les données peuvent arriver dans un ordre inadapté entre le bus d'entrée VIN et le circuit de traitement 30 et entre le circuit de traitement 30 et le bus de sortie VOUT, ou bien parce que des données en cours de traitement peuvent être combinées à des données précédemment traitées.

Les tâches à effectuer dans le système de la figure 3 consistent à calculer les adresses adéquates pour que les données arrivant sur le bus VIN soient, par exemple, rangées dans le bon ordre dans une première zone de la mémoire RAM pour être transférées séquentiellement vers le circuit de traitement 30, et pour que les données traitées soient rangées dans le bon ordre dans une deuxième zone de la mémoire RAM pour être transférées séquentiellement sur le bus de sortie VOUT.

Le bus d'entrée VIN, l'entrée et la sortie du circuit de traitement 30, et le bus de sortie VOUT sont reliés au bus de données D par l'intermédiaire de mémoires respectives 32, 33, 34, 35 de type premier-entré/premier-sorti (FIFO). Les mémoires FIFO 32 à 35 sont reliées chacune à une ligne de requête REQ. Les mémoires FIFO 32 et 34 sont à lecture seule et émettent une requête active lorsque leur remplissage dépasse un niveau maximal prédéterminé et qu'elles doivent être vidées par l'intermédiaire du bus système. Les mémoires 33 et 35 sont à écriture seule et émettent une requête active lorsque leur remplissage est inférieur à un niveau minimal prédéterminé et qu'elles doivent être remplies par l'intermédiaire du bus. Les requêtes des mémoires FIFO sont acquittées par des lignes respectives d'acquittement ACK qui sont reliées, contrairement aux figures précédentes, à un circuit d'acquittement 38.

Le circuit d'acquittement 38 reçoit un champ supplémentaire I3 de chaque instruction I fournie par la mémoire ROM 24. Avec cette configuration, les mémoires FIFO 32 à 35, et tout autre dispositif à lecture ou à écriture seule relié au bus données D, peuvent être directement sélectionnés par l'instruction en cours d'exécution (plus précisément par son champ I3), sans qu'il soit nécessaire d'émettre une adresse sur le bus d'adresses A. Ceci entraine qu'une donnée lue dans la mémoire RAM peut être directement écrite dans un dispositif à écriture seule, et qu'une donnée lue dans un dispositif à lecture seule peut être directement écrite dans la mémoire RAM, sans qu'il soit nécessaire d'effectuer d'abord un cycle de lecture suivi d'un cycle d'écriture. Ainsi, il est inutile de relier l'unité de traitement 16 au bus de données D. Le circuit 38 sert, le cas échéant, à effectuer un décodage et à mettre en forme adéquate les acquittements (il est parfois nécessaire de retarder un signal d'acquittement, par exemple pour laisser le temps à la mémoire RAM de présenter ses données sur le bus D avant d'indiquer à une mémoire FIFO de les lire).

Le fonctionnement d'un tel système est le suivant.

Les deux niveaux de priorité les plus élevés sont affectés aux requêtes des mémoires FIFO 32 et 35, car ces mémoires doivent respectivement recevoir sur le bus VIN et fournir sur le bus VOUT un flot continu de données. Si des données comprimées arrivent sur le bus VIN pour repartir décomprimées sur le bus VOUT, le débit de données est moins élevé sur le bus VIN que sur le bus VOUT. La priorité la plus élevée est alors affectée à la requête de la mémoire FIFO 35. Dans le cas contraire, c'est-à-dire si des données non comprimées arrivent sur le bus VIN pour repartir comprimées sur le bus VOUT, le niveau de priorité le plus élevé est affecté à la requête de la mémoire FIFO 32. Des niveaux de priorité inférieurs seront affectés successivement aux requêtes de la mémoire FIFO 33 et de la mémoire FIFO 34.

Comme on l'a précédemment indiqué, une mémoire FIFO à écriture par le bus (mémoires 33 et 35) émet une requête lorsque son remplissage est inférieur à un nombre minimal, par exemple égal à la moitié de la capacité de la mémoire. La tâche associée à une mémoires FIFO à écriture consiste à transférer un paquet de données de la mémoire RAM vers la mémoire FIFO, la taille de ce paquet de données étant fixe et, par exemple, égale à la moitié de la capacité de la mémoire FIFO.

Une telle opération de transfert consiste à exécuter en boucle, de la manière précédemment décrite, une instruction de lecture de la mémoire RAM 14, le nombre de boucles étant déterminé par le préfixe I1 de l'instruction de lecture. A chaque exécution de l'instruction de lecture, la mémoire RAM 14 présente une donnée sur le bus D, qui est aussitôt transférée dans la mémoire FIFO. Bien entendu, les écritures des données dans la mémoire FIFO sont synchronisées sur des fronts du signal d'horloge CK.

Une mémoire FIFO à lecture par le bus (mémoires 32 et 34) émet une requête lorsque le nombre de données qu'elle contient dépasse un niveau maximal, par exemple égal à la moitié de la capacité de la mémoire FIFO. La tâche associée à la mémoire FIFO consiste à transférer le contenu de la mémoire FIFO dans la mémoire RAM 14 par paquets de données. Chaque paquet contient un nombre fixe de données égal, par exemple, à la moitié de la capacité de la mémoire FIFO.

Une telle opération de transfert consiste à exécuter en boucle une instruction d'écriture de la mémoire RAM 14, le nombre de boucles étant déterminé par le préfixe Il de l'instruction d'écriture. Le signal d'acquittement de la mémoire FIFO étant activé, la mémoire FIFO présente ses données sur le bus au rythme du signal d'horloge CK, qui est aussi le rythme d'exécution des instructions d'écriture. Ainsi, chaque donnée présentée par la mémoire FIFO sur le bus, est aussitôt écrite dans la mémoire RAM.

Pour connaître à partir de quel emplacement dans la mémoire RAM 14 il faut transférer des paquets de données, on pourra, par exemple, mettre à jour un pointeur stocké dans la mémoire RAM. L'unité de traitement 16 comprend un registre d'adresses AR contenant l'adresse à laquelle est effectuée une opération de lecture ou écriture. Le début d'un programme de transfert d'un paquet de données comprend une instruction qui vient écrire dans ce registre d'adresses le contenu du pointeur. La suite du programme comprend, par exemple, des instructions de modification de manière adéquate du contenu du registre d'adresses à chaque instruction de lecture ou écriture (instruction de transfert). Cette modification adéquate peut consister en une incrémentation (ce qui revient à écrire ou lire des données à des adresses successives dans la mémoire RAM) ou bien en un calcul plus complexe (par exemple récursif).

Toutefois, l'exécution d'instructions de modification du registre d'adresses AR à chaque exécution d'une instruction de transfert nécessite que l'on insère des instructions, avant ou après l'instruction de transfert, qui sont exécutés dans la même boucle que l'instruction de transfert. Ceci est incompatible avec l'utilisation avantageuse du préfixe I1 permettant d'indiquer que la seule instruction courante doit être exécutée en boucle.

Pour rémédier à cet inconvénient et pour en outre accroître davantage la rapidité du système, l'unité de traitement 16 comprend une unité de calcul d'adresses 16-1 qui met en oeuvre, de manière câblée, un certain nombre de fonctions prédéterminées de calcul d'adresses. Chaque fonction de calcul de l'unité de calcul 16-1 est sélectionnée par un champ supplémentaire I4 de l'instruction I en cours d'exécution (ce champ I4 pouvant éventuellement être le champ I3). Ainsi, on sélectionne pour chaque instruction à exécuter une fonction spécifique de calcul d'adresses. Chaque fonction câblée est prévue pour modifier l'état du registre AR en synchronisme avec les cycles d'instruction (avec l'horloge CK).

Cette configuration permet d'exécuter en boucle une seule instruction de lecture ou écriture, la lecture ou écriture ayant lieu à l'adresse contenue dans le registre AR qui est automatiquement mise à jour de manière adéquate à chaque boucle.

Ci-après, on considère un programme de transfert d'un paquet de n données entre une mémoire FIFO et la mémoire RAM, ce programme correspondant à la tâche initiée par une requête fournie par la mémoire FIFO. Le nombre n est choisi suffisamment grand pour que la mémoire FIFO considérée désactive sa requête une fois qu'elle a reçu la n^{e} donnée du paquet.

Un tel programme se résume aux instructions successives suivantes :
- une instruction pour charger dans le registre AR la dernière adresse utilisée lors de la dernière exécution de la tâche courante (cette adresse étant par exemple stockée en mémoire RAM à un emplacement réservé à la tâche). Le préfixe I1 de cette instruction indique que la tâche ne doit pas être suspendue (par une tâche plus prioritaire) après l'exécution de l'instruction. Les champs I3 et I4 contiennent des valeurs inactives.
- Une instruction de transfert, dont le préfixe I1 indique que cette instruction doit être exécutée n fois et que la tâche ne doit pas être suspendue. Le champ I3 sélectionne le dispositif à traiter (32 à 35), et le champ I4 sélectionne la fonction câblée de calcul d'adresses à utiliser.
- Une instruction pour sauvegarder le contenu du registre AR, dont le préfixe I1 indique que l'exécution du programme doit continuer depuis son début et que la tâche peut être suspendue. Les champs I3 et I4 contiennent des valeurs inactives.

Une telle tâche ne peut céder la main à une tâche plus prioritaire qu'à la dernière instruction du programme (qui est la seule à autoriser la suspension de la tâche), c'est-à-dire lorsque le paquet entier a été transféré. Si le nombre de données n d'un paquet est élevé, il convient de pouvoir céder la main plus souvent à une tâche plus prioritaire.

Pour cela, une première solution consiste à diviser le paquet de n données en p sous-paquets de n₁ .. nᵢ .. nₚ données, respectivement, et prévoir un programme de transfert comprenant p sous-programmes successifs de transfert de n₁ .. nᵢ .. nₚ données, respectivement. Chaque sous-programme comprend les trois instructions susmentionnées, sauf que l'instruction de transfert est exécutée nᵢ fois au lieu de n, et que seulement l'instruction de sauvegarde du dernier sous-programme indique que le programme doit continuer depuis son début. Ceci permet de céder la main à une tâche plus prioritaire à la fin de chaque sous-programme, c'est-à-dire après un temps d'attente relativement faible au plus égal au transfert de nᵢ données (au lieu de n données). Ceci permet également de sélectionner, à chaque sous-programme, une fonction de calcul d'adresses distincte, et donc de décomposer une fonction de calcul complexe en des sous fonctions simples éventuellement utilisables pour d'autres tâches.

Toutefois, oette solution exige, entre deux transferts de nᵢ données, d'exécuter une instruction de sauvegarde et une instruction de mise à jour du registre AR, ce qui ralentit le processus.

Une deuxième solution, évitant cet inconvénient, consiste à prévoir dans l'unité de traitement 16 autant de registres d'adresses AR qu'il y a de fonctions de calcul câblées. Ainsi, chaque fonction de calcul effectue des opérations sur son propre registre d'adresses et, si la fonction est suspendue (parce que la tâche associée est suspendue), elle retrouve, dans son registre, l'adresse à partir de laquelle elle doit continuer une fois que la fonction est réactivée. Il devient inutile d'effectuer des mises à jour ou des sauvegardes de oes registres d'adresses. Il en résulte qu'un programme de transfert se réduit à une éventuelle première instruction de mise à jour d'un registre d'adresses, une éventuelle dernière instruction de sauvegarde, et entre, une sucoession d'instructions de transfert à exécuter chacune en boucle, le préfixe I1 de chaque instruction de transfert indiquant le nombre de boucles.

Il ne faut pas que le programme puisse être suspendu au milieu de l'exécution d'une instruction en boucle. Pour cela, le champ I1 de l'instruction exécutée en boucle indique par un bit actif (comme on l'a précédemment mentionné en relation avec la figure 1) que le programme ne peut être suspendu. Ce bit actif est pris en compte par le décodeur de préfixe 22 qui n'autorise alors pas l'activation du signal NEXTEN (servant à indiquer que le programme en cours peut être suspendu).

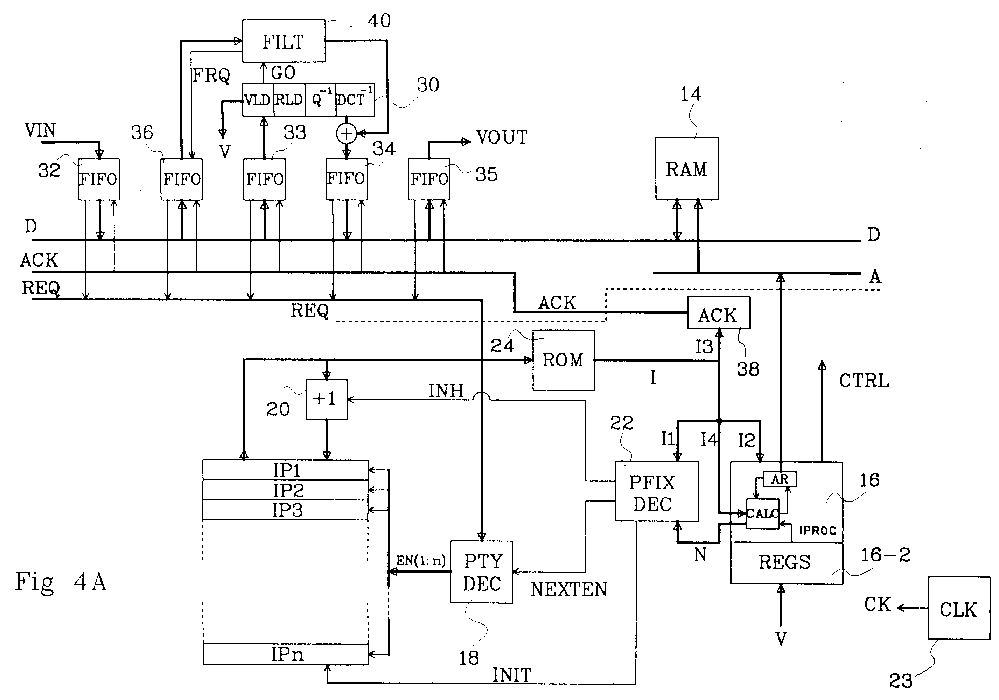

La figure 4A représente un mode de réalisation d'architecture de processeur selon la présente invention adapté à un système de traitement d'image, par exemple un système de décompression (ou décodage) de signaux vidéo comprimés (codés) selon une norme MPEG. Ce système est basé sur le système de la figure 3, dont des mêmes éléments sont désignés par des mêmes références. Le circuit de traitement 30 est un décodeur comprenant successivement un décodeur à longueur variable VLD (Variable Length Decoder), un décodeur de chaîne de zéros RLD (Run Length Decoder), un circuit de quantification inverse Q⁻¹ (multiplication par une constante), et un circuit de transformée cosinus discrète inverse (DCT⁻¹). Une mémoire FIFO supplémentaire 36 à écriture seule est connectée au bus de données D, d'acquittement ACK et de requête REQ. Cette mémoire FIFO 36 fournit des données à un filtre 40. Les données filtrées par ce filtre sont additionnées aux données de sortie du décodeur 30. La mémoire FIFO 36 est susceptible d'émettre une requête seulement si le filtre 40 active une ligne FRQ indiquant que le filtre a besoin de recevoir des données.

Le décodeur à longueur variable VLD du circuit 30 est relié à des registres 16-2 de l'unité de traitement 16 par un bus V. Ce décodeur VLD est également relié au filtre 40 par une ligne GO d'activation du filtre.

L'unité de calcul 16-1 de l'unité de traitement 16 fournit au décodeur de préfixe 22 le nombre N, précédemment mentionné, destiné, dans certains cas décrits ultérieurement, à indiquer le nombre de fois qu'une instruction doit être exécutée en boucle.

La mémoire 14 utilisée ici est une mémoire RAM dynamique (DRAM). Les mémoires DRAM présentent l'avantage d'avoir un faible encombrement, un faible coût, et une grande capacité de stockage. Toutefois, leur accès doit se faire en deux temps. En effet, une mémoire DRAM est divisée en plusieurs zones appelées pages et l'on doit, avant de lire ou écrire dans une mémoire DRAM, d'abord sélectionner une page à l'aide d'un cycle d'adressage particulier, puis sélectionner une case dans cette page à l'aide d'un cycle de lecture ou écriture normal. Bien entendu, une fois qu'une page est sélectionnée, on accède aux cases de cette page par seulement des cycles de lecture ou écriture normaux.

Dans un système de traitement d'image du type de la figure 4A, la mémoire DRAM est divisée en plusieurs zones. Une première zone est destinée à recevoir les données comprimées arrivant par le bus VIN. Des deuxième à quatrième zones sont destinées à contenir l'image en cours de traitement par le décodeur 30 ainsi que les deux dernières images traitées. L'image à afficher (à envoyer sur le bus VOUT) est lue dans l'une de ces trois dernières zones.

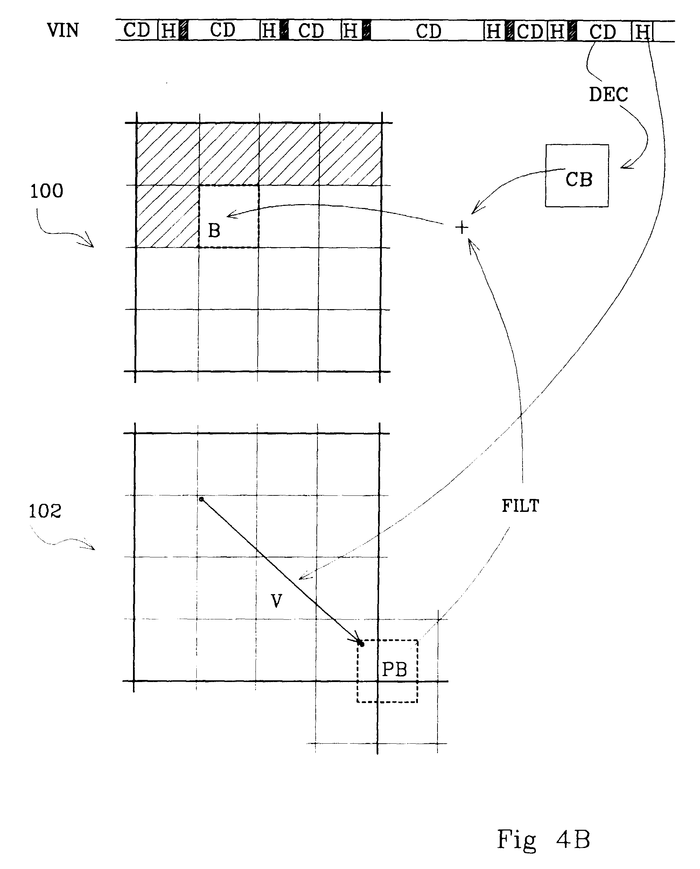

La figure 4B représente un flot de données arrivant sur le bus VIN, une portion 100 de la zone de la mémoire DRAM destinée à contenir l'image en cours de traitement, et une portion 102 de l'une des zones de la mémoire DRAM contenant les deux dernières images traitées.

Le flot de données arrivant sur le bus VIN comprend des paquets de données comprimées CD, de longueur variable, précédés d'une en-tête H. Les paquets CD successifs correspondent à des carrés successifs, de par exemple 16x16 pixels, d'une image. Chaque paquet, une fois décodé, donne naissance à ce que l'on appelle un macro-bloc qui est décomposé en un bloc de luminanoe Y de, par exemple, 16x16 pixels et en deux blocs U et V de chrominance de, par exemple, 8x8 pixels chacun. Une zone de la mémoire DRAM destinée à contenir une image est divisée en deux sous-zones destinées, l'une à contenir les blocs de luminance Y, et l'autre à contenir les blocs de chrominance U et V. On sépare ainsi les blocs de chrominance et de luminance pour que l'on puisse faire rentrer un nombre entier de blocs dans une page de la mémoire DRAM. Dans un but de simplification, on confond ci-après les deux sous-zones mémoire susmentionnées. Ainsi, on entend par lecture ou écriture d'un macro-bloc dans une zone mémoire la lecture ou écriture du bloc de luminance Y dans la première sous-zone et des blocs de chrominance U, V correspondants dans la deuxième sous-zone. On comprend ici que pour transférer un macro-bloc entre la mémoire DRAM et une mémoire FIFO, il faut une fonction de calcul d'adresses qui gère la lecture ou écriture des blocs Y dans la première sous-zone et la lecture ou écriture des blocs U et V dans la deuxième sous-zone.

Selon la norme MPEG, il existe trois types de reconstruction d'un macro-bloc, à savoir les types "intra", prédit, et interpolé. Dans la reconstruction intra, les macro-blocs fournis par le décodeur 30 correspondent directement à une portion d'image et n'ont pas besoin d'autre traitement.

Dans la reconstruction prédite, un macro-bloc d'une image en cours de reconstruction est calculé à partir d'un macro-bloc, appelé prédicteur, d'une image précédemment reconstruite ; le macro-bloc fourni par le décodeur 30 n'est qu'un macro-bloc de correction dont les valeurs sont sommées à celles du prédicteur filtré pour former le macro-bloc courant.

Un prédicteur peut être cherché dans l'image succédant ou précédant, dans l'ordre d'affichage, l'image en cours de reconstruction. Bien entendu, pour permettre cela, les images arrivent dans un ordre adéquat, distinct de celui d'affichage.

Dans la reconstruction interpolée, un macro-bloc d'une image en cours de reconstruction est calculé à partir de deux macro-blocs, également appelés prédicteurs, de deux images précédemment reconstruites, respectivement. Ces deux images précédemment reconstruites correspondent respectivement à l'image précédant l'image en cours de reconstruction et à l'image succédant l'image en cours de reconstruction. Le macro-bloc fourni par le décodeur 30 est également un macro-bloc de correction.

La figure 4B illustre une reconstruction prédite d'un macro-bloc B d'une image en cours de reconstruction dans la zone mémoire 100. Des parties hachurées de cette zone mémoire représentent des macro-blocs précédemment reconstruits. Dans la zone mémoire 102 est stockée une image complète précédemment reconstruite. L'en-tête H d'un paquet de données indique le type de reconstruction à opérer avec les données CD arrivant après cette en-tête. Dans le cas d'une reconstruction prédite, les données CD sont décodées en un macro-bloc de correction CB. Au fur et à mesure que les pixels du macro-bloc CB sont fournis, ils sont sommés aux pixels d'un prédicteur PB cherché dans la zone mémoire 102, les pixels de ce prédicteur PB étant préalablement filtrés. La position du prédicteur PB dans la zone 102 est déterminée par un vecteur V fourni par l'en-tête H. Le vecteur V donne la position relative du prédicteur P par rapport à la position correspondant, dans la zone 102, à la position du bloc B à reconstruire dans la zone 100.

On considère maintenant le fonctionnement du système de la figure 4A.

Ci-dessous apparaît une énumération des tâches associées aux diverses mémoires FIFO dans un exemple d'ordre de priorités décroissantes :
- transfert de la mémoire DRAM vers le bus VOUT (mémoire FIFO 35),
- transfert du bus VIN vers la mémoire DRAM (mémoire FIFO 32),
- transfert de la mémoire DRAM vers le décodeur 30 (mémoire FIFO 33),
- transfert de la mémoire DRAM vers le filtre 40 (mémoire FIFO 36), et
- transfert du décodeur 30 vers la mémoire DRAM (mémoire FIFO 34).

La capacité des mémoires FIFO 34 à 36 est, par exemple, de deux macro-blocs, c'est-à-dire de deux blocs de 16x16 pixels (luminance), et quatre blocs de 8x8 pixels (chrominance). Ces mémoires FIFO émettent une requête lorsqu'elles contiennent un seul macro-bloc. La capacité des mémoires FIFO 32 et 33 est, par exemple, de deux paquets de données comprimées de taille moyenne et elles émettent une requête lorsqu'elles sont à moitié pleines.

Le fonctionnement du système de la figure 4A dans le cas d'une reconstruction intra est identique à oelui de la figure 3 puisque le filtre 40, traitant les prédicteurs, n'intervient pas.

La tâche associée à la mémoire FIFO 32 consiste à écrire la moitié de son contenu dans une première zone de la mémoire DRAM, les données étant écrites dans la mémoire DRAM par ordre d'adresses successives.

La tâche associée à la mémoire FIFO 33 consiste à la remplir de la moitié de sa capacité par les données qui sont contenues dans la première zone sus-mentionnée, les données étant lues dans la mémoire DRAM par ordre d'adresses successives.

Les fonctions de calcul d'adresses associées à ces tâches consistent en une simple incrémentation d'adresse.

La tâche associée à la mémoire FIFO 34 consiste à la vider d'un macrobloc et écrire ce macro-bloc dans l'une des deuxième à quatrième zones d'image de la mémoire DRAM. Ces zones d'image sont remplies cycliquement de manière que l'on dispose toujours de deux images reconstruites et d'une en cours de reconstruction. Les macro-blocs sont écrits dans la zone d'image considérée, par exemple, de manière que les cases d'adresses successives correspondent aux pixels successifs des lignes de l'image.

La tâche associée à la mémoire FIFO 35 consiste à la remplir d'un macrobloc lu dans une zone contenant l'image à afficher, cette zone étant l'une des deuxième à quatrième zones. Les adresses sont générées de manière à lire des cases mémoire correspondant à des pixels successifs des lignes de l'image. Il est parfois possible qu'il faille lire les pixels dans une zone d'image que l'on est en train de remplir. Dans ce cas, le remplissage commence toujours un oertain temps après que l'on a commencé à lire les pixels, ce qui permet d'assurer que des pixels qui restent à lire ne soient pas écrasés par des macroblocs que l'on est en train d'écrire.

Comme on l'a précédemment indiqué, chaque macrobloc comprend un bloc de luminance stocké dans une première sous-zone de la zone d'image et deux blocs de chrominanoe stockés dans une deuxième sous-zone de la zone d'image. Ainsi, les fonctions de calcul d'adresses gèrent une séparation de données à l'écriture et un regroupement de données à la lecture, en plus de l'écriture ou de la lecture des pixels dans les sous-zones.

Dans le cadre d'une reconstruction prédite ou interpolée, le fonctionnement est le suivant.

Les tâches associées aux mémoires FIFO 32 à 35 sont celles qui ont été décrites ci-dessus.

Lorsque le décodeur à longueur variable VLD reçoit une en-tête fournissant un vecteur V de prédiction, il active le filtre 40 par l'envoi d'un signal ce et envoie en même temps le vecteur V aux registres 16-2 de l'unité de traitement 16. Le filtre 40 active la ligne FRQ pour valider l'émission de requêtes par la mémoire FIFO 36. Cette mémoire FIFO étant initialement vide, émet tout de suite une requête.

La tâche associée à la mémoire FIFO 36 consiste alors à écrire dans cette mémoire FIFO le prédicteur indiqué par le vecteur V. Le programme associé à oette tâche comprend des instructions de lecture de la mémoire DRAM exécutées en boucle qui sélectionnent, par leur champ I4, une fonction de calcul d'adresses spécifique qui exploite le vecteur V pour trouver où il faut lire le prédicteur. Dans le cas d'une reconstruction interpolée, le vecteur V est double et indique l'emplacement de chacun des deux prédicteurs nécessaires. La fonction de calcul d'adresses est alors telle que les deux prédicteurs sont lus alternativement par groupes de pixels.

Comme cela est représenté à la figure 4B, un prédicteur PB peut se trouver à cheval sur plusieurs pages de la mémoire DRAM (les frontières de page sont représentées en trait gras). La lecture du prédicteur est alors plus complexe. Dans un tel cas, déterminé par la valeur du vecteur V, la fonction de calcul sélectionnée fournit un nombre N au décodeur de préfixe. Le nombre N indique, par exemple, la longueur en pixels des colonnes du prédicteur à l'intérieur d'une page supérieure contenant partiellement le prédicteur. La lecture du prédicteur consiste à exécuter, pour chaque colonne entière, d'abord N fois une instruction de lecture pour lire les pixels de la première partie de la colonne contenue dans une page supérieure, puis L-N fois pour lire le reste de la colonne dans une page inférieure (L étant la longueur d'une colonne en pixels), un changement de page étant opéré entre les deux lectures.

Avec cette configuration, un prédicteur est lu dans le bon ordre, ce qui évite la nécessité de prévoir une fonction de calcul d'adresses complexe pour remettre dans le bon ordre les pixels du prédicteur et une mémoire tampon pour stocker temporairement le prédicteur avant sa réorganisation. Dans la demande de brevet européen 0 503 956 citée, on lit d'abord tous les pixels de la partie d'un prédicteur contenue dans une page avant de passer à la lecture d'une partie contenue dans une autre page, ceci pour minimiser le nombre de changements de page au coût d'une complexité plus élevée. Selon l'invention, on peut se permettre d'effectuer un plus grand nombre de changements de page car le système est suffisamment rapide. En outre, cette augmentation du nombre de changements de page ne représente, en pratique, que 4 cycles d'horloge sur une centaine.

L'homme du métier pourra facilement réaliser des circuits logiques permettant d'effectuer les diverses fonctions requises de calcul d'adresses.

On notera que la présente invention s'applique à un contrôleur de mémoire d'un système de traitement d'image à temps partagé. Ainsi, le système complet a été décrit de façon simplifiée pour montrer clairement les aspects que la présente invention améliore dans un tel système. L'hanme du métier saura réaliser un système complet de traitement d'image à l'aide des informations fournies dans la présente description et les consignes fournies par la norme MPEG.

## Revendications

1. Architecture de processeur pour servir une tâche courante parmi une pluralité de tâches possibles comprenant :
- une mémoire (12, 14) ayant un bus de données et un bus d'adresses et dans laquelle sont stockées les instructions de programmes correspondant respectivement aux tâches ;
- une unité de traitement d'instructions (16) couplée au bus de données pour recevoir de la mémoire des instructions au rythme de cycles d'instruction ;
- des lignes de requête (REQ) de niveaux de priorité différents associées respectivement aux tâches, chaque ligne de requête étant activée aussitôt que la tâche associée demande à être servie ;
- une pluralité de pointeurs d'instruction (IP) respectivement associés aux tâches, contenant chacun l'adresse de l'instruction courante à exécuter de la tâche associée et fournissant son contenu sur ledit bus d'adresses à chaque cycle d'instruction tant qu'une ligne de validation associée (EN) est active, d'où il résulte qu'une instruction correspondante est fournie à l'unité de traitement d'instruction et exécutée à chaque cycle d'instruction ;
- un décodeur de niveau de priorité (18) relié aux lignes de requête et aux lignes de validation des pointeurs d'instruction et activant la ligne de validation du pointeur d'instruction correspondant à la ligne de requête active de niveau de priorité le plus élevé ; et
- un circuit d'incrémentation (20) relié aux pointeurs d'instruction de manière que le pointeur d'instruction validé est modifié à chaque cycle d'instruction pour indiquer l'instruction suivante de la tâche associée.

2. Architecture selon la revendication 1, caractérisée en ce que chaque instruction (I) comprend un champ de commande (I2) fourni à l'unité de traitement d'instructions (16) et un champ de nature d'instruction (I1) fourni à un décodeur de préfixe (22) comprenant :
- des moyens (NEXTEN) pour autoriser une nouvelle validation de pointeur d'instruction par le décodeur de niveau de priorité (18) si le champ de nature de l'instruction courante est à une première valeur prédéterminée, et
- des moyens (INIT) pour initialiser le contenu du pointeur d'instruction validé à l'adresse de début du programme en cours si le champ de nature de l'instruction courante est à une deuxième valeur prédéterminée.

3. Architecture selon la revendication 2, caractérisée en ce que le décodeur de préfixe (22) comprend des moyens (INH) pour inhiber l'incrémentation du pointeur d'instruction validé si le champ de nature est à une troisième valeur prédéterminée, de manière que l'instruction courante soit exécutée plusieurs fois de suite, le nombre d'exécutions étant déterminé par la troisième valeur.

4. Architecture selon la revendication 1, caractérisée en ce que la mémoire contenant les programmes associés aux tâches est une mémoire indépendante (24) d'un bus (D, A, CTRL) sur lequel agit l'unité de traitement d'instructions (16).

5. Architecture selon la revendication 1, caractérisée en ce que chaque instruction (I) comprend un champ de commande (I2) fourni à l'unité de traitement d'instructions (16) et un champ d'acquittement (I3) fourni à des moyens (38) pour, lorsque l'instruction est en cours d'exécution, activer des dispositifs couplés à l'unité de traitement d'instructions.

6. Architecture selon la revendication 5, caractérisée en ce que lesdits dispositifs couplés à l'unité de traitement d'instructions (16) comprennent :
- au moins un dispositif à lecture seule (32, 34) activant un signal de requête (REQ) associé pour indiquer qu'il a besoin de transférer des données dans une mémoire de transit (14), l'acquittement de cette requête consistant à sélectionner seulement ce dispositif à lecture seule tandis qu'une tâche de transfert de données du bus vers la mémoire de transit est exécutée ; et
- au moins un dispositif à écriture seule (33, 35) activant un signal de requête associé lorsqu'il a besoin de recevoir des données de la mémoire de transit, l'acquittement de cette requête consistant à sélectionner seulement ce dispositif à écriture seule tandis qu'une tâche de transfert de données de la mémoire de transit sur le bus est exécutée.

7. Architecture selon la revendication 6, caractérisée en ce que l'unité de traitement (16) comprend une pluralité de fonctions câblées de calcul d'adresses, chaque fonction étant sélectionnée par un champ (I4) d'une instruction de lecture ou écriture en cours d'exécution.

8. Architecture selon la revendication 7, caractérisée en ce que à chaque fonction câblée est associé un registre d'adresses relié à un bus d'adresses (A), la fonction câblée étant prévue pour, à chaque exécution d'une instruction dans l'unité de traitement (16), modifier adéquatement le contenu de son registre d'adresses.

## Patentansprüche

1. Prozessor-Architektur zur Ausführung einer laufenden Aufgabe bzw. Task unter mehreren möglichen Tasks, die Architektur umfassend:
- einen Speicher (12,14) mit einem Datenbus und einem Adressenbus, in welchem die Befehle von den jeweiligen Aufgaben bzw. Tasks entsprechenden Programmen gespeichert sind;
- eine mit dem Datenbus gekoppelte Befehlsverarbeitungs-Einheit (16), welche aus dem Speicher Befehle im Rhythmus von Befehlszyklen zugeführt erhält;
- Anforderungsleitungen (REQ) von jeweils den Aufgaben zugeordneten unterschiedlichen Prioritätsebenen oder -niveaus, wobei jeweils jede Anforderungsleitung aktiviert wird, sobald die zugeordnete Aufgabe (Task) ausgeführt werden soll;
- mehrere den jeweiligen Aufgaben bzw. Tasks zugeordnete Befehlszeiger bzw. -Pointer (IP), deren jeder jeweils die Adresse des laufenden auszuführenden Befehls der zugeordneten Aufgabe enthält und seinen Inhalt bei jedem Befehlszyklus an den genannten Adressenbus zuführt, solange eine zugeordnete Aktivierungs- bzw. Freigabeleitung (EN) aktiviert ist, derart daß bei jedem Befehlszyklus ein entsprechender Befehl der Befehlsverarbeitungs-Einheit zugeführt und verarbeitet wird;
- einen mit den Anforderungsleitungen und mit den Aktivierungsleitungen der Befehlszeiger bzw. -pointer verbundenen Prioritätsniveau-Dekoder (18), zur Aktivierung der Aktivierungsleitung des Befehlszeigers, der der aktiven Anforderungsleitung mit dem höchsten Prioritätsniveau entspricht; sowie
- eine mit den Befehlszeigern verbundene Inkrementierschaltung, derart daß der aktivierte Befehlszeiger bzw.-pointer bei jedem Befehlszyklus zur Anzeige des nächsten Befehls der zugeordneten Aufgabe bzw. Task modifiziert wird.

2. Architektur nach Anspruch 1, dadurch gekennnzeichnet, daß jeder Befehl (I) jeweils ein der Befehlsverarbeitungseinheit (16) zugeführtes Kommando-Feld (I2) und ein Feld (I1) vom Befehlstyp umfasst, das einem Präfix- oder Vorspann-Dekoder (22) zugeführt wird, welcher umfaßt:
- Mittel (NEXTEN) zur Autorisierung einer neuen Befehlszeiger-Aktivierung durch den Prioritätsniveau-Dekoder (18), wenn das Befehlstyp-Feld des laufenden Befehls einen ersten vorgegebenen Wert besitzt, sowie
- Mittel (INIT) zur Initialisierung des Inhalts des aktivierten Programmzeigers unter der Startaddresse des laufenden Programms, falls das Befehlstyp-Feld des laufenden Befehls einen zweiten vorgegebenen Wert besitzt.

3. Architektur nach Anspruch 2, dadurch gekennzeichnet, daß der Präfix-bzw. Vorspann-Dekoder (22) Mittel (INH) aufweist, welche die Inkrementierung des aktivierten Befehlszeigers inhibieren, falls das Befehlstyp-Feld einen dritten Wert besitzt, derart daß der laufende Befehl mehrmals hintereinander ausgeführt wird, wobei die Anzahl der Mehrfachausführungen durch den dritten Wert bestimmt wird.

4. Architektur nach Anspruch 1, dadurch gekennzeichnet, daß der die den Aufgaben bzw. Tasks entsprechenden Programme enthaltende Speicher ein von einem Bus (D,A, CTRL), auf welchen die Befehlsverarbeitungseinheit (16) einwirkt, unabängiger Speicher (24) ist.

5. Architektur nach Anspruch 1, dadurch gekennzeichnet, daß jeder Befehl (I) jeweils ein der Befehlsverarbeitungseinheit (16) zugeführtes Kommando-Feld (I2) und ein Quittierungs- bzw. Bestätigungs-Feld (I3) umfaßt, das Mitteln (38) zugeführt wird, um bei der Ausführung des Befehls mit der Befehlsverarbeitungs-einheit gekoppelte Vorrichtungen zu aktivieren.

6. Architektur nach Anspruch 5, dadurch gekennzeichnet, daß die genannten mit der Befehlsverarbeitungseinheit (16) gekoppelten Vorrichtungen umfassen:
- wenigstens eine Nurlese-bzw. RO-Vorrichtung (32,34), welche ein zugeordnetes Anforderungssignal (REQ) aktiviert zur Anzeige, daß Daten in einen Transit-bzw. Durchgangsspeicher (14) überführt werden müssen, wobei die Quittierung bzw. Bestätigung darin besteht, daß nur diese Nurlese-bzw. RO- Vorrichtung ausgewählt bzw. angesteuert wird, während eine Aufgabe der Datenüberführung von dem Bus zu dem Transitspeicher durchgeführt wird; sowie
- wenigstens eine Nurschreib-bzw. WO-Vorrichtung (33,35), welche ein zugeordnetes Anforderungssignal aktiviert, sobald Daten von dem Transitspeicher empfangen werden müssen, wobei die Quittierung bzw. Bestätigung dieser Anforderung darin besteht, daß nur diese Nurschreib- bzw. WO-Vorrichtung ausgewählt bzw. angesteuert wird, während eine Aufgabe der Datenüberführung aus dem Transitspeicher zu dem Bus durchgeführt wird.

7. Architektur nach Anspruch 6, dadurch gekennzeichnet, daß die Verarbeitungseinheit (16) eine Mehrzahl von festverdrahteten Adressenberechnungsfunktionen umfaßt, wobei jede Adresse jeweils durch ein Feld (I4) eines in Ausführung befindlichen Lese- oder Schreibbefehls ausgewählt wird.

8. Architektur nach Anspruch 7, dadurch gekennzeichnet, daß jeweils jede verdrahtete Funktion einem mit einem Adressenbus (A) verbundenen Adressenregister zugeordnet ist, wobei die verdrahtete Funktion so ausgebildet ist, daß sie jeweils bei jeder Ausführung eines Befehls in der Verarbeitungseinheit (16) den Inhalt ihres Adressenregisters in geeigneter Weise modifiziert.

## Claims

1. A processor architecture for executing a current task amongst a plurality of possible tasks, including:
- a memory (12, 14) in which are stored instructions of programs respectively corresponding to the tasks;
- a processing unit (16) coupled to the memory to receive therefrom the successive instructions to be processed;
- means for providing active request signals (REQ) associated respectively with the tasks that request to be served;
- a plurality of instruction pointers (IP) respectively associated with the tasks and each containing the address of the current instruction to be executed of the associated task, one of said pointers being enabled at a time to supply its content as an address to the memory;
- a priority level decoder (18) including circuitry for assigning a predetermined priority level to each request signal and for enabling the instruction pointer associated with the active request signal having the highest priority level; and
- means (20) for incrementing the content of the enabled instruction pointer and for reinitializing it at the start address of the associated program when its content reaches the end address of the associated program.

2. The architecture of claim 1, wherein each instruction (I) includes a command field (I2) that is provided to the processing unit (16) and an instruction type field (I1) that is provided to a prefix decoder (22) including:
- means (NEXTEN) for authorizing a new instruction pointer to be enabled by the priority level decoder (18) if the type field of the current instruction has a first predetermined value; and
- means (INIT) for initializing the content of the enabled instruction pointer to the start address of the current program if the type field of the current instruction has a second predetermined value.

3. The architecture of claim 2, wherein the prefix decoder (22) includes means (INH) to inhibit the incrementation of the enabled instruction pointer if the type field has a third predetermined value, so that the current instruction is successively executed several times, the number of executions being determined by said third value.

4. The architecture of claim 1, wherein the memory including the programs associated with the tasks is a memory (24) independent of a bus (D, A, CTRL) which is controlled by the processing unit (16).

5. The architecture of claim 1, wherein each instruction (I) includes a command field (I2) that is provided to the processing unit (16) and an acknowledgment field (I3) that is provided to means (38) for, when the instruction is being executed, enabling devices that are coupled to the processing unit.

6. The architecture of claim 5, wherein said devices that are coupled to the processing unit (16) include:
- at least one read-only device (32, 34) which activates an associated request signal (REQ) to indicate that it needs to transfer data to a transit memory (14), the acknowledgment of said request consisting in selecting only said read-only device while a task for transferring data from the bus to the transit memory is executed; and
- at least one write-only device (33, 35) which activates an associated request signal when it needs to receive data from the transit memory, the acknowledgment of this request consisting in selecting only said write-only device while a task for transferring data from the transit memory to the bus is executed.

7. The architecture of claim 6, wherein the processing unit (16) includes a plurality of hard wired address calculation functions, each function being selected by a field (I4) of a read or write instruction being processed.

8. The architecture of claim 7, wherein to each hard wired function is associated an address register connected to an address bus (A), the hard wired function including circuitry for, during each execution of an instruction in the processing unit (16), adequately modifying the content of its address register.
